# EUROPÄISCHE PATENTSCHRIFT

(11) **EP 0 849 106 B1**
(45) Veröffentlichungstag und Bekanntmachung des Hinweises auf die Patenterteilung: **15.11.2000**
(21) Anmeldenummer: 97118213.4
(22) Anmeldetag: 21.10.1997
(51) Int. Cl.: B60J 10/00

(54) **Halteleiste für eine Dichtung, insbesondere in einer Applikationsanlage für Kfz-Türen**
Apparatus for supporting a sealing strip, especially in an applying device for motor vehicle doors
Dispositif de retenue d'un joint d'étanchéité, notamment dans un dispositif d'appplication pour portes de véhicules automobiles

(30) Priorität: 17.12.1996 DE 19652459
(43) Veröffentlichungstag der Anmeldung: 24.06.1998
(73) Patentinhaber: Thyssen Krupp Industries AG, 45128 Essen (DE)
(72) Erfinder: Rauland, Theo, 54317 Osburg (DE); Frings, Stefan, 66620 Nonnweiler-Primstal (DE); Haupenthal, Günter, 54411 Hermesheil (DE)
(74) Vertreter: Dahlkamp, Heinrich-Leo, Dipl.-Ing.

(56) Entgegenhaltungen:
- EP-A- 0 714 799
- DE-A- 3 638 176
- DE-A- 4 041 175
- DE-U- 29 610 642

## Beschreibung

Die Erfindung betrifft eine Halteleiste zum Halten und Positionieren einer Dichtung, insbesondere in einer Applikationsanlage für Kfz-Türen, wobei die Halteleiste Einrichtungen zum Befestigen, insbesondere an beweglichen Konturteilen der Applikationsanlage, und von den Einrichtungen ausgehende Federzungen zum Anschluss der Dichtung aufweist.

Die Dichtung für eine Kfz-Tür besitzt einen selbstklebenden Klebestreifen und wird mit diesem auf eine Klebefläche längs des Türumfangs aufgelegt und daran angepresst. Das erfolgt in der Praxis mit Hilfe einer sogenannten Applikationsanlage, zu der eine Vielzahl von Baugruppen gehört, die nach Maßgabe der Kontur des Türumfangs längs des Türumfangs angeordnet sind. Jede Baugruppe besteht im wesentlichen aus einer Fahreinheit, die im wesentlichen orthogonal zu dem ihr zugeordneten Abschnitt der Klebefläche hin- und herbewegbar ist. Auf der Fahreinheit ist ein Konturelement befestigt, dessen dem zugeordneten Abschnitt der Klebefläche gegenüberliegende Fläche nach Maßgabe der Türkonturdaten gefräst ist. An die Konturfläche ist ein Federblech aus Stahl angeschraubt, das zum Halten und Positionieren der Dichtung dient. Jeder Fahreinheit ist dabei ein gesondertes Federblech zugeordnet.

Jedes Federblech besteht beim Stand der Technik aus einem Blechstreifen, der auf einer Seite mit einer schmaleren Konturleiste verschweißt wird und der mit von dieser Seite ausgehenden Kammschlitzen versehen wird. Zwischen den Kammschlitzen entstehen die Federzungen. Jedes Federblech wird dann zusammen mit einem so genannten Aufblech auf das zugehörige Konturelement geschraubt. Sowohl die Federbleche als auch die Konturleisten und die Aufbleche sind Formteile, die dem zugeordneten Abschnitt der Klebefläche an der Türkontur angepasst sind und in der Praxis nach CAD-Daten der Türkontur folgend mittels einer Laserschneidanlage ausgeschnitten werden.

Zur Montage der Dichtung bzw. des Dichtungsringes wird der Dichtungsring auf die sich längs des Türumfangs angeordneten Federzungen aufgesteckt und über eine Hinterschneidung gesichert. Dann werden die gesamte Applikationsanlage und die Fahreinheiten so zur Fahrzeugtür bewegt, dass die Fahreinheiten mit der aufgesteckten Dichtung sich in einem definierten Abstand zur Klebefläche gelangen. Weil die Fahreinheiten sich in unterschiedlichen Richtungen bewegen, müssen sie jeweils eigene Federbleche aufweisen, die sich unabhängig von den Federblechen benachbarter Fahreinheiten bewegen lassen.

Ist die Dichtung positioniert, werden auf den Fahreinheiten angeordnete Andrückeinrichtungen betätigt, die in Höhe der Konturleisten an der Dichtung angreifen und die Dichtung mit einer vorbestimmten Andrückkraft gegen die Klebefläche drücken.

Die Herstellung der Federbleche ist aufwendig, weil jeweils drei Einzelteile nach einem CAD-Datensatz ausgeschnitten und verschweißt werden müssen. Alle Federbleche sind voneinander verschieden. Außerdem weisen die Federbleche im Betrieb nur eine begrenzte Lebensdauer auf.

Aufgabe der Erfindung ist es, eine Halteleiste der eingangs beschriebenen Gattung anzugeben, die einfacher hergestellt werden kann und eine größere Lebensdauer aufweist.

Diese Aufgabe wird dadurch gelöst, dass die Halteleiste aus einem durchgehenden, in der Draufsicht im wesentlichen mäanderförmigen Band aus Kunststoffmaterial besteht, wobei das Band federnde, im wesentlichen quer zur Längserstreckung der Halteleiste verlaufende Schenkel sowie benachbarte Schenkel verbindende Stege bildet, und wobei die Einrichtungen zum Befestigen an den Stegen der einen Seite der Halteleiste angeordnet sind, während die Federzungen von den Schenkeln sowie den Stegen der anderen Seite der Halteleiste gebildet sind. - Diese Halteleiste kann im Spritzgussverfahren so hergestellt werden, dass keine zusätzlichen Arbeiten an dem fertigen Teil notwendig sind. Auch eine Herstellung durch Fließpressen und anschließendes Ausstanzen ist denkbar. Die Halteleiste kann ähnlich wie Meterware abgelängt und eingebaut werden. Wegen der Mäanderform des durchgehenden Bandes ist es nicht mehr notwendig, unterschiedliche Teile herzustellen, die an den jeweiligen Abschnitt der Türkontur angepasst werden müssen. Wegen der Mäanderform des durchgehenden Bandes passt sich die Halteleiste jeder Türkontur an. Die Halteleiste wird längs der Konturelemente verlegt und kann wie üblich an die Konturelemente angeschraubt werden. Dazu können die Einrichtungen zum Befestigen als Bohrungen ausgebildet sein.

Es versteht sich, dass die Dicke der Halteleiste den zu erwartenden Beanspruchungen angepasst wird. Insbesondere sollte die Breite der Schenkel größer sein als die Breite von zwischen benachbarten Schenkeln gebildeten Schlitzen. Ferner können die Federzungen schenkelseitig eine Stufe als Widerlage für die Dichtung aufweisen.

Vorzugsweise besteht das Band aus Polyoximethylen (POM).

Im folgenden wird eine in der Zeichnung dargestelltes Ausführungsbeispiel der Erfindung erläutert. Es zeigen:
- Fig. 1: teilweise eine Seitenansicht einer Fahreinheit mit Konturelement und Andrückeinrichtung einer Applikationsanlage, mit der eine Dichtung an einer Kfz-Tür montiert wird,
- Fig. 2: eine Draufsicht auf einen Abschnitt einer Halteleiste,
- Fig. 3: in vergrößertem Maßstab einen Querschnitt durch den Gegenstand nach Fig. 2.

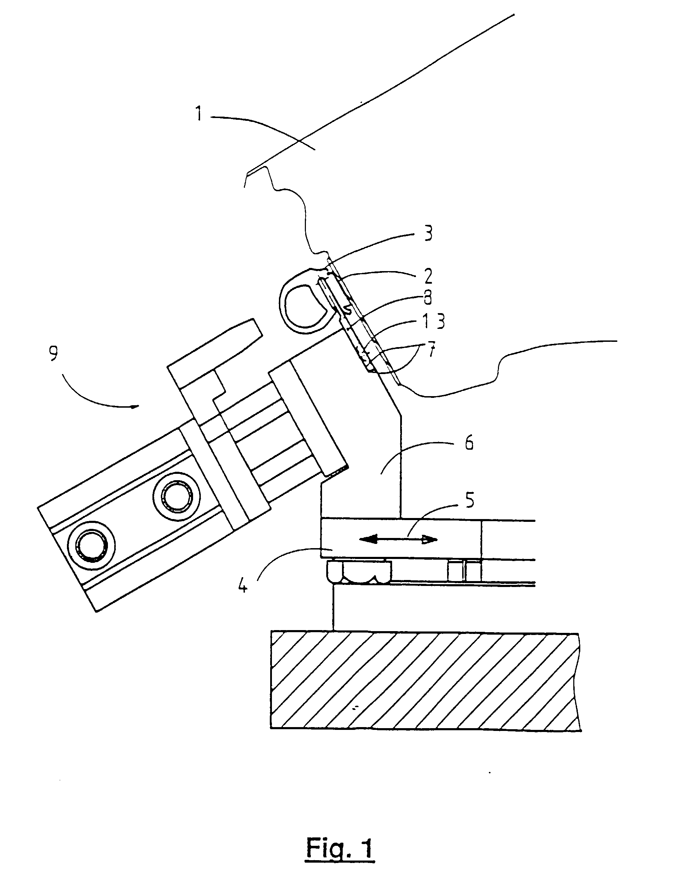

In Fig. 1 ist teilweise eine Kfz-Tür 1 mit einer umlaufenden Klebefläche 2 wiedergegeben, auf der eine Dichtung 3 befestigt werden soll. Das geschieht mit Hilfe einer Applikationsanlage, zu der eine Vielzahl von Fahreinheiten 4 gehören, die nebeneinander und der Türkontur folgend angeordnet sind. Jede Fahreinheit 4 ist in Richtung des Doppelpfeils 5 hin- und herbewegbar, wobei die Bewegungsrichtung jeder Fahreinheit 4 zum jeweils zugeordneten Abschnitt der Türkontur bzw. der Klebefläche 2 ausgerichtet ist. Auf der Fahreinheit 4 ist ein Konturelement 6 befestigt, das eine nach den Türkonturdaten des zugeordneten Abschnitts gefräste Konturfläche 7 aufweist. An diese Konturfläche 7 ist eine Halteleiste 8 angeschraubt, die über die Konturfläche 7 vorsteht und auf deren freien Rand die Dichtung 3 aufgeschoben ist.

Die Dichtung 3 wird auf die Halteleiste 8 aufgeschoben. Dann werden die Fahreinheiten 4 so bewegt, dass die Dichtung 3 sich in einer vorbestimmten Position gegenüber der Klebefläche 2 befindet. Dann wird die Dichtung 3 mit Hilfe einer an dem Konturelement 6 befestigten Andrückeinrichtung 9 mit vorbestimmter Andrückkraft gegen die Klebefläche 2 gepreßt.

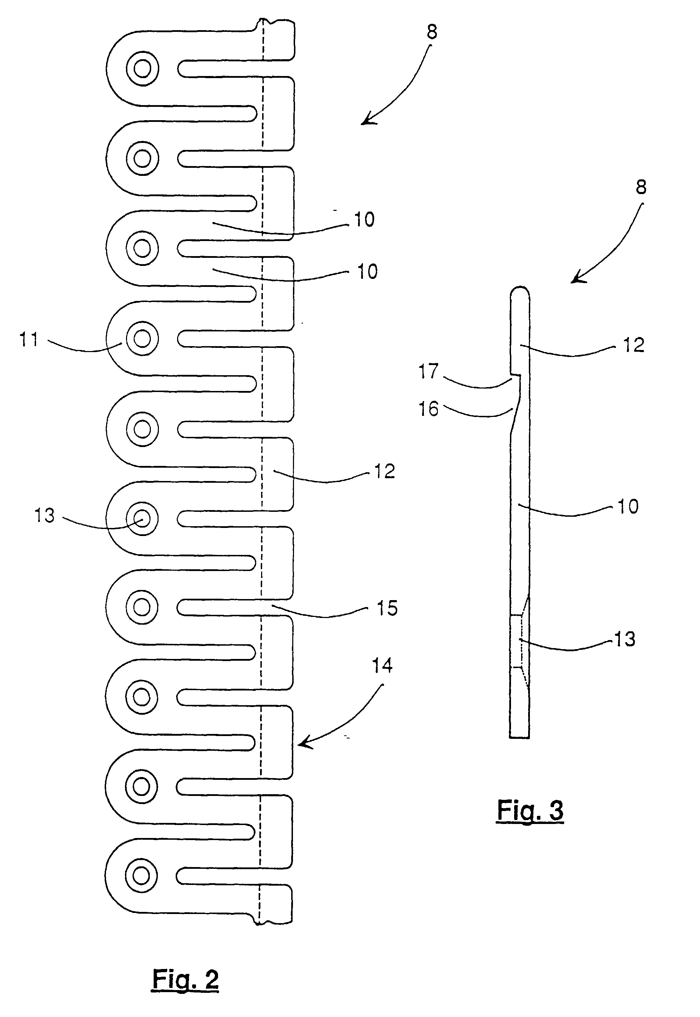

Einzelheiten der Halteleiste 8 sind in den Figuren 2 und 3 wiedergegeben. Die Halteleiste 8 besteht aus einem durchgehenden, in der Draufsicht mäanderförmigen Band aus Kunststoffmaterial, vorzugsweise aus Polyoximethylen (POM). Die Halteleiste 8 kann im Spritzgussverfahren hergestellt werden, sodass keine zusätzlichen Arbeiten an dem so hergestellten Teil notwendig sind. Die Halteleiste 8 kann aber auch durch Fließpressen und anschließendes Ausstanzen hergestellt werden. Für den Einsatz in der Applikationsanlage kann die Halteleiste auf die gewünschte Länge zugeschnitten und dann eingebaut werden.

Im einzelnen bildet das mäanderförmige Band federnde, im wesentlichen quer zur Längserstreckung der Halteleiste 8 verlaufende Schenkel 10 sowie benachbarte Schenkel verbindende Stege 11,12. An den Stegen 11 der einen Seite der Halteleiste 8 sind Bohrungen 13 zum Befestigen der Halteleiste 8 an den Konturelementen 6 vorgesehen. Die anderen Stege 12 bilden zusammen mit ihren zugeordneten Schenkeln 10 Federzungen 14, auf die die Dichtung 3 aufgeschoben wird.

Die Dicke der Halteleiste 8 wird den zu erwartenden Beanspruchungen angepasst. Bei der dargestellten Ausführung ist die Breite der Schenkel 10 größer als die Breite von zwischen benachbarten Schenkeln 10 gebildeten Schlitzen 15.

In Fig. 3 ist dargestellt, dass die Federzungen 14 der Halteleiste 8 einseitig eine Ausnehmung 16 mit einer zu den Schenkeln 10 hinweisenden Stufe 17 aufweisen, die als Widerlager für die auf die Federzungen 14 aufgeschobene Dichtung 3 dient.

### Bezugszeichenliste:

- 1: Kfz-Tür
- 2: Klebefläche
- 3: Dichtung
- 4: Fahreinheit
- 5: Doppelpfeil
- 6: Konturelement
- 7: Konturfläche
- 8: Halteleiste
- 9: Andrückeinrichtung
- 10: Schenkel
- 11: Steg
- 12: Steg
- 13: Bohrungen
- 14: Federzungen
- 15: Schlitze
- 16: Ausnehmung
- 17: Stufe

## Patentansprüche

1. Halteleiste (8) zum Halten und Positionieren einer Dichtung, insbesondere in einer Applikationsanlage für Kfz-Türen, wobei die Halteleiste (8) Einrichtungen (13) zum Befestigen, insbesondere an beweglichen Konturteilen der Applikationsanlage, und von den Einrichtungen ausgehende Federzungen (14) zum Anschluss der Dichtung aufweist, **dadurch gekennzeichnet**, dass die Halteleiste (8) aus einem durchgehenden, in der Draufsicht mäanderförmigen Band aus Kunststoffmaterial besteht, wobei das Band federnde, im wesentlichen quer zur Längserstreckung der Halteleiste (8) verlaufende Schenkel (10) sowie benachbarte Schenkel (10) verbindende Stege (11,12) bildet, und wobei die Einrichtungen zum Befestigen an den Stegen (11) auf der einen Seite der Halteleiste (8) angeordnet sind, während die Federzungen (14) von den Schenkeln (10) sowie den Stegen (12) der anderen Seite der Halteleiste (8) gebildet sind.

2. Halteleiste nach Anspruch 1, **dadurch gekennzeichnet**, dass die Einrichtungen zum Befestigen als Bohrungen (13) ausgebildet sind.

3. Halteleiste nach einem der Ansprüche 1 oder 2, **dadurch gekennzeichnet**, dass die Breite der Schenkel (10) größer ist als die Breite von zwischen benachbarten Schenkeln (10) gebildeten Schlitzen (15).

4. Halteleiste nach einem der Ansprüche 1 bis 3, **dadurch gekennzeichnet**, dass die Federzungen (14) schenkelseitig eine Stufe (17) als Wderlager für die Dichtung (3) aufweisen.

5. Halteleiste nach einem der Ansprüche 1 bis 4, **dadurch gekennzeichnet**, dass das Band aus Polyoximethylen (POM) besteht.

## Claims

1. An apparatus (retainer ledge) (8) for supporting and positioning a sealing strip, especially in an applying device for motor vehicle doors, wherein said retainer ledge (8) features facilities (13) for fixing, especially to mobile contour component parts of the applying device, and spring tongues (14) proceeding from these facilities for connection of the sealing strip, characterized in that said retainer strip (8) consists of a continuous tape of plastic material which has got the shape of a meander if viewed from the top, with said tape forming resilient legs (10) mainly extending transversely to the longitudinal extension of said retainer strip (8) as well as webs (11,12) connecting adjacent legs (10), and wherein the facilities for fixing to the webs (11) are arranged on one side of the retainer ledge (8), while the spring tongues (14) are formed by the legs (10) as well as the webs (12) of the other side of the retainer ledge (8).

2. A retainer ledge pursuant to Claim 1, characterized in that the facilities for fixing are configured as bores (13).

3. A retainer ledge pursuant to Claim 1 or 2, characterized in that the width of the legs (10) is greater than the width of slots (15) formed between two adjacent legs (10).

4. A retainer ledge pursuant to any one Claim 1 to 3, characterized in that the spring tongues (14) feature a step (17) on the leg side which serves as an abutment for the sealing strip (3).

5. A retainer ledge pursuant to any one Claim 1 to 4, characterized in that the tape is made of polyoximethylene (POM).

## Revendications

1. Dispositif de retenue (8) pour retenir et positionner un joint d'étanchéité, notamment dans un dispositif d'application pour portières de véhicules automobiles, le dispositif de retenue (8) présentant des éléments de fixation (13), en particulier aux pièces profilées mobiles du dispositif d'application, et des lames élastiques (14) partant des éléments, pour le raccordement du joint d'étanchéité, **caractérisé en ce que** le dispositif de retenue (8) est constitué par une bande continue en plastique, qui se présente sous forme méandrique en vue de plan, la bande formant des ailes (10) élastiques se déployant essentiellement perpendiculairement au développement longitudinal du dispositif de retenue (8) ainsi que des traverses (11, 12) reliant les ailes (10) voisines, et les dispositifs de fixation aux traverses (11) étant aménagés sur l'un des côtés du dispositif de retenue (8), alors que les lames élastiques (14) sont formées par les ailes (10) ainsi que les traverses (12) de l'autre côté du dispositif de retenue (8).

2. Dispositif de retenue selon la revendication 1, **caractérisé en ce que** les éléments de fixation se présentent sous forme de perçages (13).

3. Dispositif de retenue selon l'une des revendications 1 ou 2, **caractérisé en ce que** la largeur des ailes (10) est supérieure à la largeur des fentes (15) formée par deux ailes (10) voisines.

4. Dispositif de retenue selon une des revendications 1 à 3, **caractérisé en ce que** les lames élastiques (14) présentent un gradin (17) côté ailes, servant de butée pour le joint d'étanchéité (4).

5. Dispositif de retenue selon une des revendications 1 à 4, **caractérisé en ce que** la bande est en polyoximethylène (POM).
